# EUROPÄISCHE PATENTANMELDUNG

(11) **EP 1 826 858 A1**
(43) Veröffentlichungstag der Anmeldung: **29.08.2007**
(21) Anmeldenummer: 06003739.7
(22) Anmeldetag: 23.02.2006
(51) Int. Cl.: H01M 8/24, H01M 8/02

(54) **Verfahren zum Betreiben einer Brennstoffzellenanlage sowie Brennstoffzellenanlage**

(71) Anmelder: SIEMENS AKTIENGESELLSCHAFT, 80333 München (DE)
(72) Erfinder: Bette, Willi, 91056 Erlangen (DE); Mattejat, Arno, 91056 Erlangen (DE); Stühler, Walter, 96114 Hirschaid (DE)

(57) **Zusammenfassung**

Bei einer Brennstoffzellenanlage (1), die einen verfahrenstechnischen Betriebsraum (2) mit einem darin angeordneten Brennstoffzellenblock (9) und einen elektrischen Betriebsraum (3) mit darin angeordneten elektrischen Komponenten der Brennstoffzellenanlage (1) umfasst, kann der Gesamtwirkungsgrad dadurch erhöht werden, dass Luft für den Betrieb der Brennstoffzellen des Brennstoffzellenblocks (9) in den elektrischen Betriebsraum (3) geleitet wird, zumindest einen Teil des elektrischen Betriebsraums (3) durchströmt, danach in den verfahrenstechnischen Betriebsraum (2) geleitet wird und von dort dem Brennstoffzellenblock (9) zugeführt wird.

Durch die Luftführung über den elektrischen Betriebsraum (3) können zum einen die in dem elektrischen Betriebsraum (3) angeordneten elektrischen Komponenten gekühlt werden, wodurch der Energieaufwand für die Kühlung dieser Komponenten reduziert wird. Zum andern wird hierdurch die Luft erwärmt, so dass dem Brennstoffzellenblock erwärmte Luft zugeführt werden kann, durch die der Brennstoffzellenblock mit einem guten Wirkungsgrad betreibbar ist.

## Beschreibung

Die Erfindung betrifft ein Verfahren zum Betreiben einer Brennstoffzellenanlage gemäß Oberbegriff des Patentanspruchs 1 sowie eine Brennstoffzellenanlage gemäß Oberbegriff des Patentanspruchs 8; eine derartige Brennstoffzellenanlage ist z.B. aus der Druckschrift "SISHIP^{CIS} Fuel Cell AIR Low temperature fuel cells: zero-emission energy production for passenger and cargo ships" Bestell-Nr. E10001-P19-A31-V1-7600, Siemens AG, 2004, bekannt.

Die vorgenannte Druckschrift offenbart eine containerisierte Brennstoffzellenanlage, d.h. eine Brennstoffzellenanlage bei der die Brennstoffzellen sowie weitere verfahrenstechnische und elektrische Komponenten in einem geschlossenen Gehäuse in Form eines Containers untergebracht sind. Bei den Brennstoffzellen handelt es sich um Niedertemperatur-Brennstoffzellen, die mit Luft und reinem Wasserstoff betrieben werden.

Der Container ist hierbei in einen elektrischen und einen verfahrenstechnischen Betriebsraum aufgeteilt. Der elektrische Betriebsraum enthält elektrische Komponenten, die nicht in unmittelbarer Nähe der Brennstoffzellen angeordnet sein müssen, z.B. Schaltanlagen, Umrichter, elektronische Steuerungen. Der verfahrenstechnische Betriebsraum enthält die Brennstoffzellen, die üblicherweise zu einem Brennstoffzellenblock zusammengefasst sind, sowie weitere verfahrenstechnische, elektronische und elektrische Komponenten, die in der Nähe der Brennstoffzellen angeordnet sein müssen. Dazu gehören Pumpen, Verdichter, Sensoren und Messwandler. Der verfahrenstechnische Betriebsraum ist vom elektrischen Betriebsraum durch eine Wand getrennt.

Die Luftzufuhr zu den Brennstoffzellen erfolgt üblicherweise derart, dass die Luft von außerhalb des Containers in den verfahrenstechnischen Betriebsraum geleitet und von dort den Brennstoffzellen zugeführt wird.

Hiervon ausgehend ist es Aufgabe der vorliegenden Erfindung, ein Verfahren zum Betreiben einer eingangs genannten Brennstoffzellenanlage sowie eine Brennstoffzellenanlage anzugeben, durch die mit geringem konstruktivem Aufwand der Wirkungsgrad der Brennstoffzellenanlage verbessert werden kann.

Die Lösung der auf das Verfahren gerichteten Aufgabe gelingt erfindungsgemäß durch ein Verfahren gemäß Patentanspruch 1. Die Lösung der auf die Brennstoffzellenanlage gerichteten Aufgabe gelingt erfindungsgemäß durch eine Brennstoffzellenanlage gemäß Patentanspruch 8. Vorteilhafte Ausgestaltungen des Verfahrens bzw. der Brennstoffzellenanlage sind jeweils Gegenstand der Unteransprüche.

Das erfindungsgemäße Verfahren sieht vor, dass Luft für den Betrieb der Brennstoffzellen des Brennstoffzellenblocks in dem elektrischen Betriebsraum geleitet wird, zumindest einen Teil des elektrischen Betriebsraums durchströmt, danach in den verfahrenstechnischen Betriebsraum geleitet wird und von dort dem Brennstoffzellenblock zugeführt wird.

Die Luft für den Betrieb der Brennstoffzellen wird somit nicht wie bisher üblich von außerhalb des verfahrenstechnischen Betriebsraumes und des elektrischen Betriebsraumes direkt in den verfahrenstechnischen Betriebsraum geleitet, sondern über den elektrischen Betriebsraum in den verfahrenstechnischen Betriebsraum geleitet. Hierdurch wird die Luft durch die im elektrischen Betriebsraum vorhandene Verlustwärme der elektrischen Komponenten vorgewärmt und die vorgewärmte Luft den Brennstoffzellen zugeführt. Hierdurch kann die Leistungsfähigkeit der Brennstoffzellen und somit deren Wirkungsgrad verbessert werden. Gleichzeitig können die elektrischen Komponenten im elektrischen Betriebsraum durch den Luftstrom gekühlt werden. Kühleinrichtungen wie z.B. Kühlwasserkreisläufe, Ventilatoren etc. können somit kleiner ausgelegt werden, als dies bisher erforderlich war. Hierdurch kann der Energiebedarf für die Kühlung der elektrischen Komponenten reduziert werden. Insgesamt kann somit der Gesamtwirkungsgrad der Brennstoffzellenanlage verbessert werden. Der geringe konstruktive Mehraufwand für die Luftführung durch den elektrischen Betriebsraum wird durch den geringeren konstruktiven Aufwand für Kühleinrichtungen im elektrischen Betriebsraum im Wesentlichen ausgeglichen, wodurch die Erhöhung des Gesamtwirkungsgrades ohne nennenswerten konstruktiven Mehraufwand möglich ist.

Bevorzugt wird die Luft von einem oberen Bereich des elektrischen Betriebsraums in den verfahrenstechnischen Betriebsraum geleitet, da sich, durch Konvektion bedingt, die warme Luft in den oberen Bereichen des elektrischen Betriebsraums sammelt. Hierdurch ist eine besonders gute Abfuhr der Wärme und gleichzeitig gute Erwärmung der den Brennstoffzellen zuzuführenden Luft möglich.

Die Kühlwirkung kann dabei noch verbessert werden, wenn die Luft in dem elektrischen Betriebsraum zumindest einen Teil der elektrischen Komponenten zumindest teilweise umströmt.

Wenn die Luft in dem verfahrenstechnischen Betriebsraum vor der Zufuhr zu den Brennstoffzellen den Brennstoffzellenblock zumindest teilweise umströmt, kann eine Ansammlung von aus den Brennstoffzellenblock ausgetretenem Leckage-Brenngas und somit eine Bildung explosiver Gasgemische in dem verfahrenstechnischen Betriebsraum verhindert werden, denn das Leckage-Brenngas wird durch den Luftstrom abgefördert, den Brennstoffzellen zugeführt und dann durch thermische Abreaktion an den Kathoden der Brennstoffzellen beseitigt.

Die gewünschte Führung der Luft in den verfahrenstechnischen Betriebsraum ist dann besonders einfach möglich, wenn der Luftdruck in dem verfahrenstechnischen Betriebsraum kleiner ist als der Luftdruck in dem elektrischen Betriebsraum und der Luftdruck in dem elektrischen Betriebsraum wiederum kleiner ist als der Luftdruck in einem Raum außerhalb des elektrischen Betriebsraumes, aus dem die Luft in den elektrischen Betriebsraum geleitet wird. Bei Vorliegen derartiger Druckverhältnisse kann die Luftströmung ohne zwischengeschaltete aktive Elemente, wie z.B. zusätzliche Ventilatoren, bis in den verfahrenstechnischen Betriebsraum erfolgen.

Die gewünschten Druckverhältnisse können zum einen durch ein Drücken von Luft in den elektrischen Betriebsraum mit Hilfe eines Ventilators erfolgen. Bevorzugt werden die Druckverhältnisse jedoch durch ein Ansaugen von Luft aus dem verfahrenstechnischen Betriebsraum für deren Zuführung zu dem Brennstoffzellenblock erzeugt.

Der Luftdruck in dem verfahrenstechnischen Betriebsraum kann dabei erfasst und bei Unterschreiten eines vorgebbaren Grenzwertes Luft von außerhalb des elektrischen Betriebsraumes und des verfahrenstechnischen Betriebsraumes direkt in den verfahrenstechnischen Betriebsraum geführt werden. Somit kann sichergestellt werden, dass im Fall, dass sich über den normalen Luftzufuhrweg über den elektrischen Betriebsraum nicht genug Luft zuführen lässt, der verfahrenstechnische Betriebsraum eine weitere Möglichkeit der Luftzufuhr zur Bereitstellung der benötigten Luftmenge für den Brennstoffzellenblock bietet.

Bei einer erfindungsgemäßen Brennstoffzellenanlage weist der elektrische Betriebsraum eine Zuluftöffnung auf, durch die Luft von außerhalb des elektrischen Betriebsraumes in den elektrischen Betriebsraum einleitbar ist. Zwischen dem elektrischen Betriebsraum und dem verfahrenstechnischen Betriebsraum besteht hierbei ein Luftdurchlass, durch den Luft von dem elektrischen Betriebsraum in den verfahrenstechnischen Betriebsraum leitbar ist. Die für das erfindungsgemäße Verfahren genannten Überlegungen und Vorteile gelten entsprechend für die erfindungsgemäße Brennstoffzellenanlage.

Bevorzugt ist der Luftdurchlass auf Seite des elektrischen Betriebsraumes in einem oberen Bereich des elektrischen Betriebsraums angeordnet.

Wenn der verfahrenstechnischen Betriebsraum von dem elektrischen Betriebsraum durch eine Trennwand getrennt ist, kann der Luftdurchlass als eine Öffnung in der Trennwand ausgebildet sein.

Gemäß einer besonders vorteilhaften Ausgestaltung weist die Brennstoffzellenanlage eine Einrichtung auf, durch die in dem verfahrenstechnischen Betriebsraum ein Luftdruck erzeugbar ist, der kleiner ist als der Luftdruck in dem elektrischen Betriebsraum, und durch die in dem elektrischen Betriebsraum ein Luftdruck erzeugbar ist, der wiederum kleiner ist als der Druck in dem Raum außerhalb des elektrischen Betriebsraumes, aus dem die Luft in den elektrischen Betriebsraum einleitbar ist.

Die Einrichtung zu Erzeugung der Druckverhältnisse kann dabei einen Luftverdichter zur Zufuhr verdichteter Luft zu den Brennstoffzellen umfassen, wobei der Luftverdichter eine Ansaugöffnung aufweist, durch die Luft aus dem verfahrenstechnischen Betriebsraum ansaugbar ist. Durch die Ansaugung der Luft aus dem verfahrenstechnischen Betriebsraum kann ein Unterdruck in dem verfahrenstechnischen Betriebsraum im Vergleich zu dem elektrischen Betriebsraum erzeugt werden, aufgrund dessen Luft von dem elektrischen Betriebsraum durch den Luftdurchlass in den verfahrenstechnischen Betriebsraum gesaugt wird. Durch die Ansaugung der Luft aus dem elektrischen Betriebsraum kann wiederum in dem elektrischen Betriebsraum ein Unterdruck im Vergleich zu dem Raum erzeugt werden, aus dem die Luft in den elektrischen Betriebsraum einleitbar ist und aufgrund dieses Unterdruck kann wiederum Luft von außerhalb des elektrischen Betriebsraumes in den elektrischen Betriebsraum gesaugt werden.

Die Erfindung sowie weitere vorteilhafte Ausgestaltungen der Erfindung gemäß Merkmalen der Unteransprüche werden im Folgenden anhand eines Ausführungsbeispieles in der FIG näher erläutert.

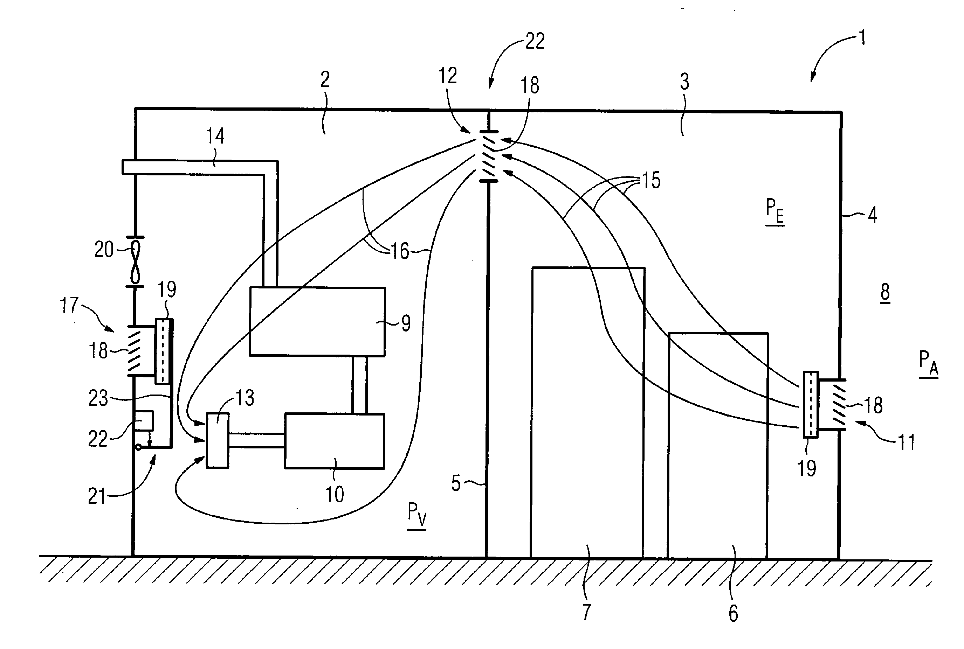

Die einzige FIG zeigt in prinzipieller und vereinfachter Darstellung einen Schnitt durch eine Brennstoffzellenanlage 1, die einen verfahrenstechnischen-Betriebsraum 2 und einen elektrischen Betriebsraum 3 umfasst, die in einem Container 4 untergebracht sind. Der verfahrenstechnische Betriebsraum 2 und der elektrische Betriebsraum 3 werden hierbei durch eine Trennwand 5 voneinander getrennt. Bei der Brennstoffzellenanlage 1 handelt es sich somit um eine containerisierte Brennstoffzellenanlage. Bei dem Container handelt es sich bevorzugt um einen Standard-Transportcontainer.

In dem elektrischen Betriebsraum 3 sind elektrische Komponenten wie z.B. eine Schaltanlage 6 und ein Transformator 7 sowie weitere, nicht dargestellte elektrische Komponenten, die sich nicht in unmittelbarer Nähe der Brennstoffzellen befinden müssen, angeordnet.

In dem verfahrenstechnischen Betriebsraum 2 sind ein Brennstoffzellenblock 9 und ein Verdichter 10 zur Zufuhr von Luft zu den Brennstoffzellen des Brennstoffzellenblocks 9 angeordnet. Der Verdichter 10 weist eine Ansaugöffnung 13 auf, durch die Luft aus dem verfahrenstechnischen Betriebsraum 2 in den Verdichter 10 einleitbar ist. Abluft der Brennstoffzellen des Brennstoffzellenblocks 9 wird über eine Abluftleitung 14 aus dem verfahrenstechnischen Betriebsraum 2 und somit aus dem Container 4 abgeführt.

Der elektrische Betriebsraum 3 weist eine Zuluftöffnung 11 auf, durch die Luft von außerhalb des Containers 4 in den elektrischen Betriebsraum 3 einleitbar ist. Zwischen dem elektrischen Betriebsraum 3 und dem verfahrenstechnischen Betriebsraum 2 besteht ein Luftdurchlass 12 in Form einer Öffnung in der Trennwand 5, durch die Luft von dem elektrischen Betriebsraum 3 in den verfahrenstechnischen Betriebsraum 2 leitbar ist.

Durch Ansaugen von Luft aus dem verfahrenstechnischen Betriebsraum 3 wird mit Hilfe des Luftverdichters 10 in dem verfahrenstechnischen Betriebsraum 2 ein Luftdruck P_{V} erzeugt, der kleiner ist als der Luftdruck P_{E} in dem elektrischen Betriebsraum 3. Aufgrund des Druckunterschiedes strömt Luft durch den Luftdurchlass 12 von dem elektrischen Betriebsraum 3 in den Verfahrenstechnischen Betriebsraum 2. Durch die Ansaugung von Luft aus dem elektrischen Betriebsraum 3 in den verfahrenstechnischen Betriebsraum 2 wird in dem elektrischen Betriebsraum 3 wiederum ein Luftdruck P_{E} erzeugt, der kleiner ist als der Luftdruck P_{A} in der Umgebung 8 außerhalb des Containers 4, aus der die Luft in den elektrischen Betriebsraum 3 eingeleitet wird. Aufgrund des Druckunterschiedes strömt Luft durch die Zuluftöffnung 11 von außerhalb des Containers 4 in den in den verfahrenstechnischen Betriebsraum 2.

Wichtig für die Einstellung der gewünschten Druckverhältnisse ist hierbei die Anordnung der Ansaugöffnung 13 des Luftverdichters 10 in oder an dem verfahrenstechnischen Betriebsraum 2. Der Verdichter 10 selbst kann sich grundsätzlich sowohl innerhalb als auch außerhalb des verfahrenstechnischen Betriebsraumes 2 befinden.

Beim Betrieb der Brennstoffzellenanlage wird aufgrund der erzeugten Druckverhältnisse die Luft für den Betrieb der Brennstoffzellen des Brennstoffzellenblocks 9 durch die Zuluftöffnung 11 in den elektrischen Betriebsraum 3 geleitet, durchströmt - wie anhand der Strömungspfeile 15 angedeutet - einen Teil des elektrischen Betriebsraumes 3, wird danach durch die Öffnung 12 in der Trennwand 5 in den verfahrenstechnischen Betriebsraum 2 geleitet und von dort über die Ansaugöffnung 13 des Verdichters 10 dem Brennstoffzellenblock 9 zugeführt.

Beim Durchströmen des elektrischen Betriebsraumes 3 nimmt die Luft Wärme der elektrischen Komponenten 6, 7 auf. Hierdurch wird zum einen die Luft erwärmt und zum anderen werden die elektrischen Komponenten 6, 7 gekühlt. Eine besonders gute Kühlung der elektrischen Komponenten 6, 7 in dem elektrotechnischen Betriebsraum 3 erfolgt dadurch, dass die elektrischen Komponenten derart angeordnet sind, dass die Luft zumindest einen Teil der elektrischen Komponenten 6, 7 umströmt.

Der Brennstoffzellenblock 9 ist in dem elektrischen Betriebsraum 3 derart angeordnet, dass die Luft in dem verfahrenstechnischen Betriebsraum 2 vor der Zufuhr zu dem Brennstoffzellenblock 9 diesen zumindest teilweise umströmt. Hierdurch kann eine Ansammlung von Leckage-Brenngas und somit eine Bildung zündfähiger Gasgemische im verfahrenstechnischen Betriebsraum 2 vermieden werden.

Weiterhin kann durch die Art der Luftführung von dem elektrischen Betriebsraum 3 in den verfahrenstechnischen Betriebsraum 2 ausgeschlossen werden, dass Leckage-Brenngas und gegebenenfalls zündfähige Luftgemische in den elektrischen Betriebsraum 3 gelangen können. Die bei elektrischen Komponenten immer gegebene Zündgefahr kann deshalb reduziert werden, wodurch die elektrischen Komponenten im elektrischen Betriebsraum keine erhöhte Zündschutzart aufweisen müssen.

Durch die Kühlung der elektrischen Komponenten 6, 7 durch den Luftstrom 15 können Kühleinrichtungen wie Kühlwasserkreisläufe, Ventilatoren etc. kleiner ausgelegt werden, als dies bei einer direkten Einleitung der Luft von außerhalb des Containers 4 in den verfahrenstechnischen Betriebsraum 2 erforderlich wäre. Hierdurch wird der Energieaufwand für die Kühlung der elektrischen Komponenten reduziert. Auf der anderen Seite können durch die Aufwärmung der Luft in dem elektrischen Betriebsraum die Brennstoffzellen des Brennstoffzellenblocks 9 mit einem guten Wirkungsgrad betrieben werden. Insgesamt wird durch die genannten Maßnahmen somit der Wirkungsgrad der Gesamtanlage verbessert. Abgesehen von der zusätzlichen Luftzufuhröffnung 11 in dem elektrischen Betriebsraum 3, des Luftdurchlasses 12 in der Trennwand 5 sowie der gegebenenfalls notwendig höheren Leistung des Verdichters 10 für die Ansaugung der Luft aus dem verfahrenstechnischen Betriebsraum 2 sind so gut wie keine weiteren baulichen Maßnahmen für die Verbesserung des Wirkungsgrades notwendig. Da auf der anderen Seite der Aufwand für die Kühleinrichtungen in dem elektrischen Betriebsraum 3 durch die Wärmeabfuhr über den Luftstrom 15 reduziert wird, kann die Verbesserung des Wirkungsgrades ohne wesentlichen konstruktiven und apparativen Mehraufwand erfolgen.

Für den Fall, dass über den elektrischen Betriebsraum 3 nicht genug Luft in den verfahrenstechnischen Betriebsraum 2 und über den Verdichter 10 in den Brennstoffzellenblock 9 einleitbar ist, weist der verfahrenstechnische Betriebsraum 2 eine Zuluftöffnung 17 auf, durch die Luft von außerhalb des Containers 4, d.h. außerhalb des elektrischen Betriebsraumes 3 und des verfahrenstechnischen Betriebsraumes 2, in den verfahrenstechnischen Betriebsraum 2 einleitbar ist. Weiterhin sind Mittel 21 vorgesehen, durch die der Luftdruck in dem verfahrenstechnischen Betriebsraum 2 erfassbar und die Zuluftöffnung 17 verschließbar ist, wenn der Luftdruck einen vorgebbaren Grenzwert nicht unterschreitet, und die Zuluftöffnung öffenbar ist, wenn der Luftdruck den vorgebaren Grenzwert überschreitet. Die Mittel 21 umfassen hierbei einen Differenzdruckwächter 22 zur Messung des Differenzdruckes zwischen dem verfahrenstechnischen Betriebsraum 2 und der Umgebung 8 außerhalb des Containers 4 sowie eine federbelastete Klappe 23, durch die die Zulüftöffnung 17 verschließbar ist. Der Grenzwert wird somit in Abhängigkeit von dem Luftdruck in der Umgebung 8 außerhalb des Containers 4 vorgegeben.

Wenn sich über den elektrischen Betriebsraum 3 genug Luft zuführen lässt, und somit der Differenzdruck unterhalb eines Grenzwertes bleibt, wirkt der Differenzdruckwächter nicht auf die federbelastete Klappe ein. Die federbelastete Klappe bleibt somit aufgrund der Federwirkung in einer Ruhestellung und verschließt dabei die Zuluftöffnung 17. Wenn sich jedoch über den elektrischen Betriebsraum 3 nicht genug Luft zuführen lässt, und somit der Differenzdruck den Grenzwert überschreitet, wirkt der Differenzdruckwächter auf die federbelastete Klappe derart ein, dass die Klappe von ihrer Ruhestellung in eine Stellung bewegt wird, in der die Zuluftöffnung 17 geöffnet ist.

Sämtliche Zuluftöffnungen 11, 17 sind mit Jalousien 18 versehen, die größere Verunreinigungen wie Regentropfen oder Blätter abhalten. Dahinter befindet sich jeweils ein Filter 19 zur Entfernung von Staub aus der Luft. Die Höhe der Öffnungen 11, 17 in der Außenwand des Containers ist so gewählt, dass grobe Verunreinigungen, die z.B. in Bodennähe durch Wind entstehen, nicht in das Innere des Containers 4 hineingelangen können. Auch die Öffnung 12 in der Trennwand 5 ist mit einer Jalousie versehen, durch die sich die Druckverhältnisse im Zusammenspiel mit der federbelasteten Klappe 23 an der zusätzlichen Zuluftöffnung 17 einstellen lassen.

## Patentansprüche

1. Verfahren zum Betreiben einer Brennstoffzellenanlage (1), die einen verfahrenstechnischen Betriebsraum (2) mit einem darin angeordneten Brennstoffzellenblock (9) und einen elektrischen Betriebsraum (3) mit darin angeordneten elektrischen Komponenten (6,7) der Brennstoffzellenanlage (1) umfasst,
**dadurch gekennzeichnet, dass** Luft für den Betrieb der Brennstoffzellen des Brennstoffzellenblocks (9) in den elektrischen Betriebsraum (3) geleitet wird, zumindest einen Teil des elektrischen Betriebsraums (3) durchströmt, danach in den verfahrenstechnischen Betriebsraum (2) geleitet wird und von dort dem Brennstoffzellenblock (9) zugeführt wird.

2. Verfahren nach Anspruch 1,
**dadurch gekennzeichnet, dass** die Luft von einem oberen Bereich (22) des elektrischen Betriebsraums (3) in den verfahrenstechnischen Betriebsraum (2) geleitet wird.

3. Verfahren nach einem der vorhergehenden Ansprüche,
**dadurch gekennzeichnet, dass** die Luft in dem elektrischen Betriebsraum (3) zumindest einen Teil der elektrischen Komponenten(6,7) zumindest teilweise umströmt.

4. Verfahren nach einem der vorhergehenden Ansprüche,
**dadurch gekennzeichnet, dass** die Luft in dem verfahrenstechnischen Betriebsraum (2) vor der Zufuhr zu den Brennstoffzellen den Brennstoffzellenblock (9) zumindest teilweise umströmt.

5. Verfahren nach einem der vorhergehenden Ansprüche,
**dadurch gekennzeichnet, dass** zur Luftführung der Luftdruck (P_{V}) in dem verfahrenstechnischen Betriebsraum (2) kleiner ist als der Luftdruck (P_{E}) in dem elektrischen Betriebsraum (3) und der Luftdruck (P_{E}) in dem elektrischen Betriebsraum (3) wiederum kleiner ist als der Luftdruck (P_{A}) in einem Raum (8) außerhalb des elektrischen Betriebsraumes (3), aus dem die Luft in den elektrischen Betriebsraum (3) geleitet wird.

6. Verfahren nach Anspruch 5,
**dadurch gekennzeichnet, dass** die Druckverhältnisse durch ein Ansaugen von Luft aus dem verfahrenstechnischen Betriebsraum (2) für deren Zuführung zu dem Brennstoffzellenblock (9) erzeugt werden.

7. Verfahren nach Anspruch 5,
**dadurch gekennzeichnet, dass** der Druck (Pᵥ) in dem verfahrenstechnischen Betriebsraum erfasst wird und bei Unterschreiten eines vorgegebenen Grenzwertes Luft von einem Raum (8) außerhalb des elektrischen Betriebsraumes (3) und des verfahrenstechnischen Betriebsraumes (2) direkt in den verfahrenstechnischen Betriebsraum (2) geführt wird.

8. Brennstoffzellenanlage (1), die einen verfahrenstechnischen Betriebsraum (2) mit einem darin angeordneten Brennstoffzellenblock (9) und einen elektrischen Betriebsraum (3) mit darin angeordneten elektrischen Komponenten (6,7) der Brennstoffzellenanlage (1) umfasst,
**dadurch gekennzeichnet, dass** der elektrische Betriebsraum (3) eine Zuluftöffnung (11) aufweist, durch die Luft von außerhalb des elektrischen Betriebsraumes (3) in den elektrischen Betriebsraum (3) einleitbar ist, und dass zwischen dem elektrischen Betriebsraum (3) und dem verfahrenstechnischen Betriebsraum (2) ein Luftdurchlass (12) besteht, durch den Luft von dem elektrischen Betriebsraum (3) in dem verfahrenstechnischen Betriebsraum (2) leitbar ist.

9. Brennstoffzellenanlage (1) nach Anspruch 8,
**dadurch gekennzeichnet, dass** der Luftdurchlass (12) auf Seite des elektrischen Betriebsraumes (3) in einem oberen Bereich (22) des elektrischen Betriebsraum (3) angeordnet ist.

10. Brennstoffzellenanlage (1) nach einem der Ansprüche 8 bis 9, **dadurch gekennzeichnet, dass** der verfahrenstechnischen Betriebsraum (2) von dem elektrischen Betriebsraum (3) durch eine Trennwand (5) getrennt ist und dass der Luftdurchlass als eine Öffnung (12) in der Trennwand (5) ausgebildet ist.

11. Brennstoffzellenanlage (1) nach einem der Ansprüche 8 bis 10, **dadurch gekennzeichnet, dass** die elektrischen Komponenten (16,7) in dem elektrischen Betriebsraum (3) derart angeordnet sind, dass die Luft zumindest einen Teil der elektrischen Komponenten (6,7) zumindest teilweise umströmt.

12. Brennstoffzellenanlage (1) nach einem der Ansprüche 8 bis 11, **dadurch gekennzeichnet, dass** der Brennstoffzellenblock (9) in dem verfahrenstechnischen Betriebsraum (2) derart angeordnet ist, dass ihn die Luft vor ihrer Zufuhr zu dem Brennstoffzellenblock zumindest teilweise umströmt.

13. Brennstoffzellenanlage (1) nach einem der Ansprüche 8 bis 12, **gekennzeichnet durch** eine Einrichtung (9), **durch** die in dem verfahrenstechnischen Betriebsraum (2) ein Luftdruck (P_{V}) erzeugbar ist, der kleiner ist als der Luftdruck (P_{E}) in dem elektrischen Betriebsraum (3), und **durch** die in dem elektrischen Betriebsraum (3) ein Luftdruck (P_{E}) erzeugbar ist, der wiederum kleiner ist als der Luftdruck (P_{A}) in dem Raum (8) außerhalb des elektrischen Betriebsraumes (3), aus dem die Luft in den elektrischen Betriebsraum (3) einleitbar ist.

14. Brennstoffzellenanlage (1) nach Anspruch 13,
**dadurch gekennzeichnet, dass** die Einrichtung zu Erzeugung der Druckverhältnisse einen Luftverdichter (9) zur Zufuhr verdichteter Luft zu den Brennstoffzellen umfasst, wobei der Luftverdichter eine Ansaugöffnung (13) aufweist, durch die Luft aus dem verfahrenstechnischen Betriebsraum (2) ansaugbar ist.

15. Brennstoffzellenanlage (1) nach einem der Ansprüche 8 bis 14, **dadurch gekennzeichnet, dass** der verfahrenstechnische Betriebsraum (2) eine Zuluftöffnung (17) aufweist, durch die Luft von einem Raum (8) außerhalb des elektrischen Betriebsraumes (3) und des verfahrenstechnischen Betriebsraumes (2) in den verfahrenstechnischen Betriebsraum (2) leitbar ist, und dass Mittel (21) vorgesehen sind, durch die der Druck (P_{V}) in dem verfahrenstechnischen Betriebsraum erfassbar ist und die Zuluftöffnung (17) verschließbar ist, wenn der Druck (P_{V}) einen vorgegebenen Grenzwert nicht unterschreitet, und die Zuluftöffnung (17) öffenbar ist, wenn der Druck (P_{V}) den vorgegebenen Grenzwert unterschreitet.

16. Brennstoffzellenanlage (1) nach einem der Ansprüche 8 bis 15, **dadurch gekennzeichnet, Dass** die beiden Betriebsräume (2,3) in einem Standard-Transportcontainer (4) untergebracht sind.
